# EUROPEAN PATENT APPLICATION

(11) **EP 0 603 095 A2**
(43) Date of publication of application: **22.06.1994**
(21) Application number: 93480155.6
(22) Date of filing: 05.10.1993
(51) Int. Cl.: G06F 9/44

(54) **Method and apparatus for managing a windowing environment in an object oriented programming system**

(30) Priority: 05.11.1992 US 971738
(71) Applicant: International Business Machines Corporation, Armonk, N.Y. 10504 (US)
(72) Inventor: Elder, David Brian, Alpharetta, Georgia 30202 (US); Kandhal, Ravindra Singh, Alpharetta, Georgia 30202 (US); Krosner, Stephen Paul, Marietta, Georgia 30062 (US); Miller, Paul Edwin, Atlanta, Georgia 30306 (US)
(74) Representative: Therias, Philippe

(57) **Abstract**

An object oriented programming system with method and apparatus for managing a windowing environment. A user interface server provides the services which enable an end user to input and interact with data in an application running on a given operating system. Such user interface server provides bidirectional communication using deferred interfacing classes between the application and end users. The deferred interfacing classes provide the complete programming interface between platform independent and platform dependent classes of objects using the inheritance property of object oriented programming systems.

## Description

The field of the invention relates generally to an object oriented programming system (OOPS). More particularly, the invention relates to managing a windowing environment across a plurality of diverse operating systems and hardware devices by minimizing platform dependencies.

Object oriented programming systems (OOPS) and processes have been the subject of much investigation and interest in state of the art data processing environments. Object oriented programming is a computer programming technique which provides reusable and easily expandable programs. In contrast with other conventional programming techniques, which are not easily adaptable to new functional requirements and to new types of data, object oriented programs are reusable and expandable as new requirements arise. With the ever increasing complexity of computer based systems, object oriented programming has received increased attention and investigation. A more detailed description of object oriented programming can be found in a number of references, including Object Oriented Systems Analysis by Sally Shlaer and Stephen J. Mellor (Yourdon Press Computing Series, 1988), Object Oriented Design With Applications by Grady Booch (The Benjamin/Cummings Publishing Company, 1990), and Object Oriented Software Construction by Bertrand Meyer (Prentice Hall, 1988).

In conventional programming techniques, emphasis is put on the methods to be conducted on particular data sets. However, in object oriented programming systems, emphasis is instead placed on real world objects which have attributes and actions to be performed on such attributes. An object is a data structure containing information about something of interest to particular systems and its users. For example, in a manufacturing system, an object of interest would be an "Engineering Change" (EC) object which contains information relating to an engineering change made to a part or process in the manufacturing system. This EC object could have information related to the owner of an EC, the number of the EC, or the date that the EC was created. Objects having similar characteristics and common behavior are known as instance objects of a class of objects. Therefore, instance objects contain information about particular things in the system while class objects contain information about all instance objects of that class.

In object oriented programming systems, messages are sent to objects. A message has three parts. The first part is an object identifier while the second part is an action to be performed. The object ID of the particular message simply identifies that piece of data which comprises a specific object, that is, the instance. The action in the message then specifies what to do with that piece of data or instance. Finally the third part comprises optional parameters for use by the action.

In an object oriented programming system, work is accomplished by sending an action request to an object which contains or encapsulates some data. The object will then perform the requested action on the data according to its published specification. The requester of such action need not know what the actual data looks like or how the object manipulates the data.

Two of the primary characteristics of object oriented programming systems are encapsulation and inheritance. Recall that an object is a data structure and a set of operations or functions that can access the data structure. The data structure can be represented by a frame containing a number of slots with each slot containing attributes of the data. Each attribute may be a primitive, i.e., an integer or a string, or an object reference, that points to another object's instance or instances. Each operation or function that can access the data structure is called a method.

A frame is encapsulated by its methods, which means that all access to that data structure is handled by the surrounding methods, thereby providing data independence. The inheritance property allows previously written programs to be broadened by creating new super-classes and sub-classes of objects. Each subclass inherits the frame and method of its super class.

Present day computer systems commonly use graphical user interfaces (GUI) to enhance the usability of such computer systems by a user. Such graphical user interfaces make it easier for the user to interact with the computer than would be the case with a purely textual user interface. Graphical user interfaces have become even more important as multiple applications run simultaneously on the computer.

One aspect of such computer systems utilizing either a graphical user interface or a textual interface that has greatly increased the power of the systems is the use of viewports or windows. Such windows are typically rectangular areas on a computer display which are simultaneously active and permit the simultaneous display of portions of computer applications in the window. Most current computer systems which operate in a windowing environment permit multiple applications to be simultaneously output active while only the outer most window is input active.

In a multi-windowed display, the window on which an end user is currently working is usually called the active window. When this window becomes active, the priority of the window displays change and the active window moves in top of or in front of all the other windows in the display. Thus, all of the active window is visible while the remaining windows are either partially hidden or even entirely hidden under the active window. Normally, to select a desired window from among the plurality of windows on a display and move it to the front thus making it the desired active window, a pointing device, such as a mouse, is used. The user positions a display pointing image, such as a pointer, to a frame line or an icon pattern on the desired window. By pressing a button on the mouse, the window is selected and becomes the active window. The mouse can also be used to move various windows around the display screen as well as selecting another of the windows on the display to be the active window. According to the present invention, these actions can also be performed using a keyboard only.

Oftentimes, the display in the computer system having a plurality of windows is referred to as a desktop with each window representing a piece of paper lying on the desktop. Just as the pieces of paper on the desktop may be moved around, restacked and reshuffled, so that different pieces of paper are exposed, similarly the windows can be moved in the same manner on the display system. One of the fundamental principles of an object oriented user interface is "the user in control" design premise, that is, the user is in control of the system instead of the system dictating or limiting how the user interacts at any point in time. In such an object oriented system in a windowing environment, the user thus has the flexibility to interact with any part of the system at any time by opening and using one of the plurality of windows on the display. Using the desktop analogy, the user can create an extremely messy desk and potentially hide windows by opening other windows.

Object oriented programming systems typically implement a messy desk environment in which numerous activities take place simultaneously within the same application. In an object oriented computer system, work is accomplished by sending action request messages to an object which contains or encapsulates data. The object will perform the requested action on the data according to its predefined methods. An object's class defines the types and meanings of the data and the action requests or messages that the object will honor. The individual objects containing data are called instances of the class and the program performing the requested actions are called the method of the class.

Object classes can be defined to be subclasses of other classes. Subclasses inherit all the data characteristics and methods of its parent class. Subclasses can add additional data and methods and can redefine any data elements or methods of the parent class. A message is handled using the data in the object instance and the method in its class or its parent class, as long as a target object either defines a method to handle the message or has a parent class that defines such a method.

In terms of nomenclature, panels and windows are used interchangeably to refer to an interface component which presents objects and actions to users on a display screen. For example, the multi-tasking capability provided by the IBM OS/2 Operating System on the IBM PS/2 computer allows many applications to share the terminal monitoring screen through the Presentation Manager component of OS/2. The window or panel that the user is currently interacting with is called the active window or panel.

One of the key problems faced in the implementation of a windowing environment in an object oriented programming system is how to deal with a diverse set of display environments and hardware devices. This problem is especially acute as one attempts to preserve the application programming interface and while maximizing the amount of platform independent code. Platform independent code is code that can run on more than one operating system and/or hardware environment, i.e., it is not unique to one operating system and/or hardware environment. If one is not able to maximize the amount of platform independent code, then significant amounts of code must be written for each platform on which a particular application may run. While it is not possible to achieve a completely platform independent user interface, it is desirable to maximize the percentage of platform independent code and minimize the percentage of platform dependent code while creating a consistent well-define interface between the two. Platform dependent code is code that can run on only a single operating system and/or hardware environment.

As an example, assume an application is running on an operating system such as IBM's MVS/TSO using non-programmable terminals which are non-intelligent workstations. If it were then desired to run that application on an AIX operating system, it would be necessary to replace the entire presentation layer that enables an end user to interact with the application. It would be most desirable to minimize the amount of new code for the presentation layer in the AIX operating system while maintaining a consistent user interface between the two operating systems for the same application.

Accordingly, it is an object of this invention to provide an improved object oriented programming system.

It is another object of this invention to provide an improved windowing environment in an object oriented programming system.

It is yet another object of this invention to minimize platform dependencies in an object oriented programming system when managing a windowing environment across a plurality of diverse hardware and operating systems.

In accordance with these and other objects, there is disclosed a method and apparatus for managing a windowing environment in an object oriented programming system. A user interface server provides the services which enable an end user to input and interact with data in an application running on an operating system. The user interface server provides a bidirectional communication between such applications and end users by providing a library of interface components that are used to organize task specific data and interaction at the end user interface.

The user interface server enables the end user to operate in the messy desk environment common to object oriented programming systems. Application specific data can be organized and displayed on an end user screen. The multiple panels or screens in the messy desk environment can be scrolled, moved or resized for effective space management by the end user using the user interface server.

The user interface server provides capabilities in three key areas. The first is used to display application objects and their attributes. Examples here would include lists, data entry fields, and information fields which enable an end user to select application objects and view or modify the attributes of such objects. The second group is represented by a menu bar across the top of the panel or display screen as well as pull-down menus associated therewith. This set provides controls that enable an end user to specify actions to be performed on application objects. Finally, the third group provides function key assignments for the panel or display screen in view and always appear at the bottom of the display screen.

In order to minimize platform dependent dependency, the user interface server includes a set of deferred interface classes which provide the complete programming interface between platform independent and platform dependent classes of objects. Platform dependent classes of objects are enabled by obtaining required information from the deferred interfacing classes using the inheritance property of object oriented programming systems.

Fig. 1 illustrates a schematic representation of an object.

Fig. 2 illustrates a schematic representation of an example of an object.

Fig. 3 illustrates a graphical representation of an object instance.

Fig. 4 illustrates a graphical representation of a computing environment in which the present invention operates.

Fig. 5 illustrates a schematic representation of a computing environment using a TSO operating system.

Fig. 6 illustrates a graphical representation of a computing environment using an AIX operating system.

Fig. 7 illustrates a graphical representation of a computing environment according to the present invention using a TSO operating system with deferred interfacing classes.

Fig. 8 illustrates a graphical representation of a computing environment according to the present invention having an AIX operating system with deferred interfacing classes.

Fig. 9 illustrates a schematic representation of the hierarchical relationship between certain classes in a computing environment in which the present invention operates.

Fig. 10 illustrates a graphical representation of the architecture of the user interface server in which the present invention operates.

Fig. 11 illustrates the flow of control of the user interface server in which the present invention operates.

Fig. 12 illustrates a graphical representation of a panel or display screen in which the present invention operates.

Fig. 13 illustrates a graphical representation of a panel or display screen in which the present invention operates.

Fig. 14 illustrates a graphical representation of a panel or display screen in which the present invention operates.

Fig. 15 illustrates a graphical representation of a panel or display screen in which the present invention operates.

Fig. 16 illustrates a graphical representation of a panel or display screen in which the present invention operates.

The present invention will now be described more fully hereinafter with reference to the accompanying figures, in which a preferred embodiment of the invention is shown. This invention may, however, be embodied in many different forms and should not be construed as limited to the embodiment set forth herein; rather, this embodiment is provided so that this disclosure will be thorough and complete and will fully convey the scope of the invention to those skilled in this art.

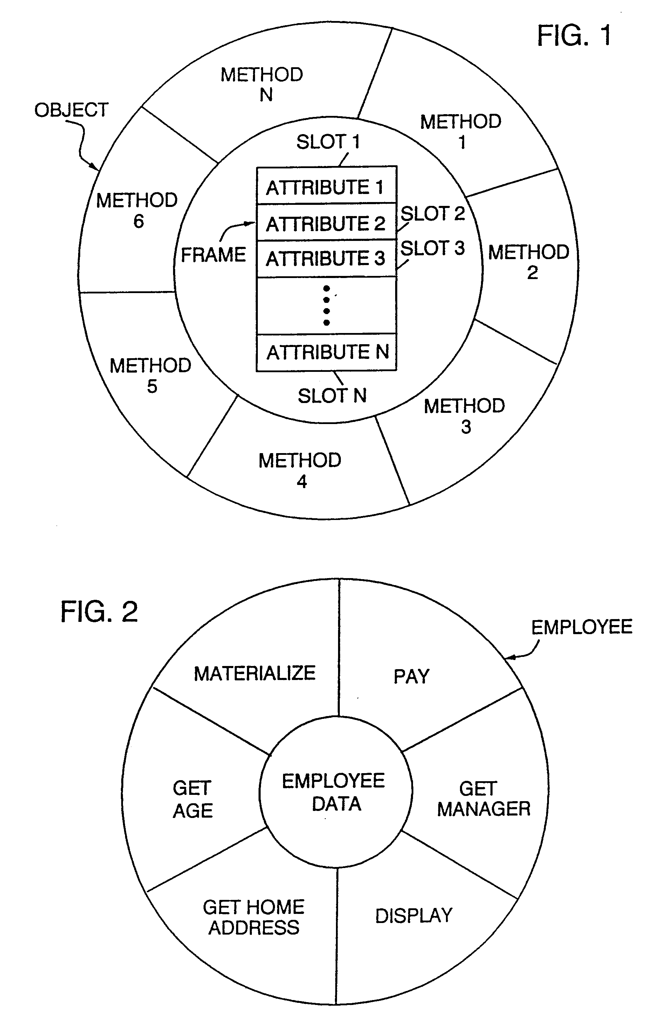

Referring now to Fig. 1, an object is represented in which a frame is encapsulated within its method. Recall that an object is a data structure and a set of operations that access that data structure. The data structure may be represented as a frame with the frame having many slots, each of which contains an attribute of the data in the slot. The attribute may be a primitive, i.e., an integer or a string, or an object reference which is a pointer to another object's instance or instances. Each action or function that can access a data structure and cause it to do something is called a method.

Fig. 2 illustrates an example of an object, in which the data structure relates to employee data, and a number of methods surround this data structure. One method, for example, contains the age of an employee. Each defined object normally is manifested in a number of instances. Each instance contains the particular data structure for a particular example of an object. For example, an object for an individual employee named John Smith is an instance of the employee object.

A primary characteristic of an object oriented programming system is referred to as encapsulation. As may be seen from Fig. 1, the frame is encapsulated by its method or functions with a wall of code being placed around each piece of data. All access to the frame is handled by the surrounding methods. Data independence is thereby provided because an object's data structure is accessed only by its methods. Only the associated methods know the internal data structure of the object. In such an object oriented programming system, a high level routine requests an object to perform one of the methods by sending the object a message telling the object what to do. The receiving object then responds to the message by choosing the method that implements the message name, executing this method, and then returning control to the calling high level routine along with the results of the method.

Object oriented programming systems may be employed as database management systems, which are capable of operating upon a large database and which are both expandable and adaptable. In an object oriented programming system, operating as a database management system, the data in the database is organized and encapsulated in terms of objects with the instances of the objects being the data in the database. Similarly, the database manager may be organized as a set of objects with the database management operations being performed by sending messages from one object to another object. The target or receiving object performs the requested action on its attributes by using its encapsulated methods.

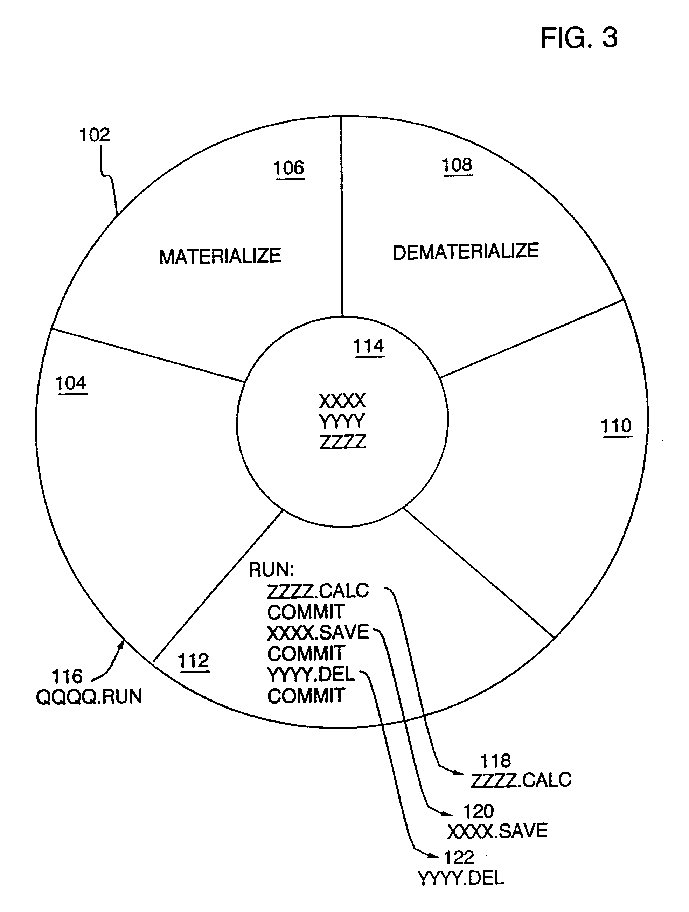

OOPS contains object instances that are referenced by object identifiers and grouped into object classes. Fig. 3 represents a graphical representation of a known object instance 102. The object instance 102 is referenced by an object identifier QQQQ. The object instance 102 contains data 114 known as attributes, and functions 104, 106, 108, 110 and 112, which are known as methods. The object instance 102 could represent an object instance which was created during interactive processing to represent an interactive user message. Alternatively, the object instance 102 could represent a queued message request which was created during processing.

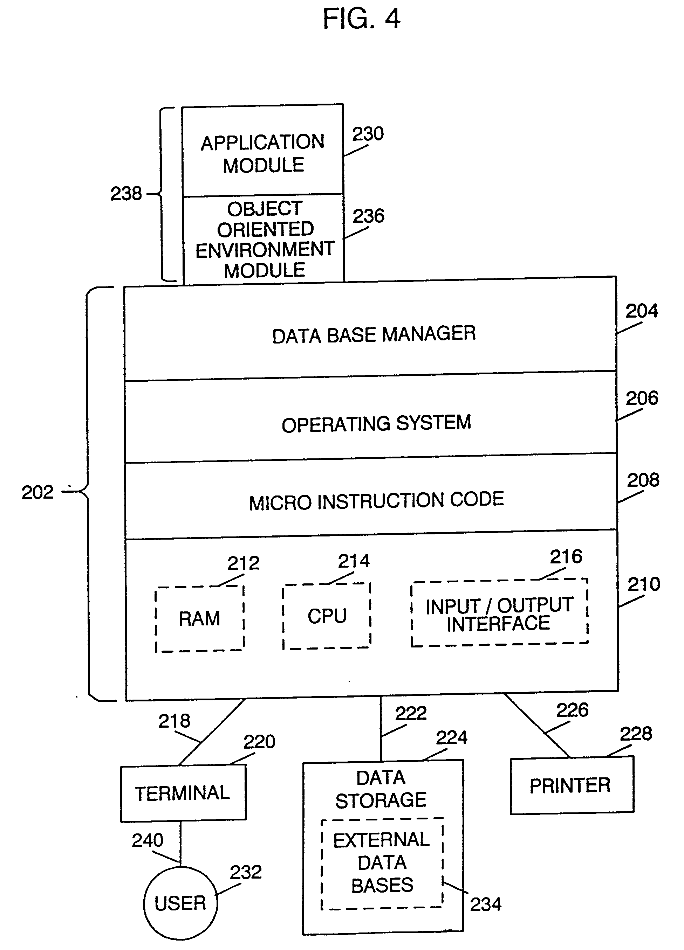

Fig. 4 represents a graphical representation of the computing environment in which the present invention operates. In general, object instances are either persistent, i.e., non-volatile, or non-persistent, i.e., volatile. The object instance 102 shown in Fig. 3 is a persistent object instance. The data 114 associated with such persistent object instance 102 is stored in external databases 234 as shown in Fig. 4. The external databases 234 are maintained in a secondary storage 224.

The persistent object instance 102 contains materialize method 106 to read data 114 from external databases 234. Persistent object instance 102 also contains dematerialize method 108 to write data 114 into the external database 234. Note that there is a difference between writing the data 114 and committing the data 114 to the external databases 234. Specifically, data 114 which is written to external databases 234 utilizing the dematerialize method 108, is not visible in external databases 234 until data 114 is committed to external databases 234 using a commit message. Materialize method 106 is used to load data 114 into a main memory 212 for processing by methods 104, 110 and 112. While processing, methods 104, 110 and 112 cause the dematerialize method 108 to write data 114 to external database 234. When the methods 104, 110 and 112 determine that the data 114 is in a consistent state, methods 104, 110 and 112 use the commit message to commit the data 114 to external database 234. Data 114 associated with non-persistent object instances is not stored in external database 234. Additionally, nonpersistent object instances do not include materialize method 106 and dematerialize method 108.

A message QQQQ.RUN 116 is sent to object 114 from a user 232 via a terminal 220 or from a method associated with another object instance. QQQQ in message 116 identifies the destination object instance 102. RUN in message 116 identifies the method that is to be executed, thereby invoking method 112 in object instance 102. Upon invocation, method 112 issues additional messages 118, 120 and 122, with message 118 invoking a method CLAC in an object instance ZZZZ. Similarly, message 120 invokes a method SAVE in an object instance XXXX, and message 122 invokes a method DEL in an object instance YYYY.

As shown in Fig. 4, the present invention includes a computer application program 238 which operates on computer platform 202. Platform 202 includes hardware units 210, including a central processing unit (CPU) 214, a random access memory (RAM) 212, and an input/output interface 216. RAM 212 is also called main memory 212. Additionally, computer platform 202 includes micro instruction code 208, an operating system 206, and a database manager 204. Various peripheral components may be connected to the computer platform 202, which is a terminal 220, a data storage device 224, and a printing device 228. The data storage device 224 is also called a secondary storage 224 and may include hard disks and tape drives. Data storage device 224 represents a nonvolatile storage which supports commit messages and which includes external databases 234.

In the preferred embodiment of the present invention 238, computer platform 202 includes a computer having IBM's System 370 architecture, and the operating system which runs thereon is either an IBM multiple virtual storage (MVS) or an IBM AIX operating system. The database manager 204 is an IBM DB2, which is a relational database manager. Finally, application program 238, which is written in intermediate C, i.e., an object oriented dialect of the C computer language, is IBM's ProductManager application program. Note that intermediate C is similar to the C++ computer programming language. A computer application program 238 such as IBM's ProductManager program includes an application module 230 and an object oriented computing environment module 236. Conceptually, application module 230 would operate on top of the object oriented computing environment module 236, which in turn would operate on top of database manager 204.

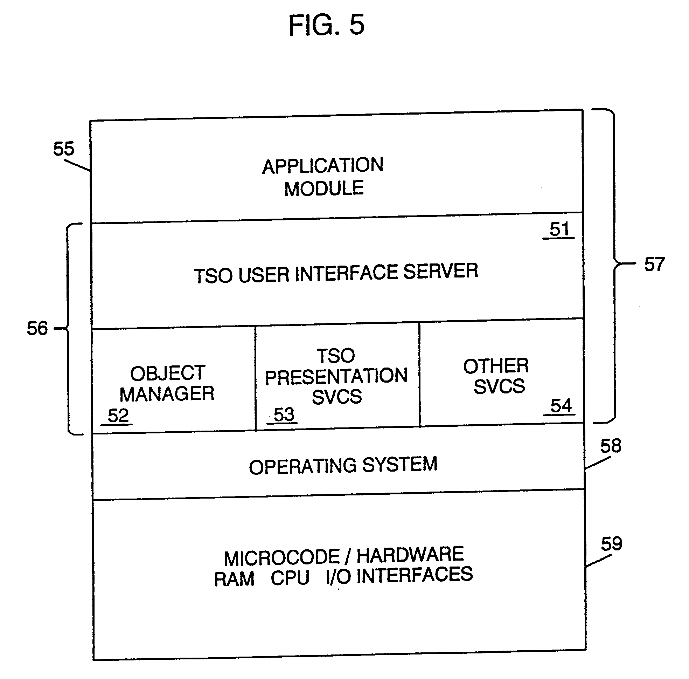

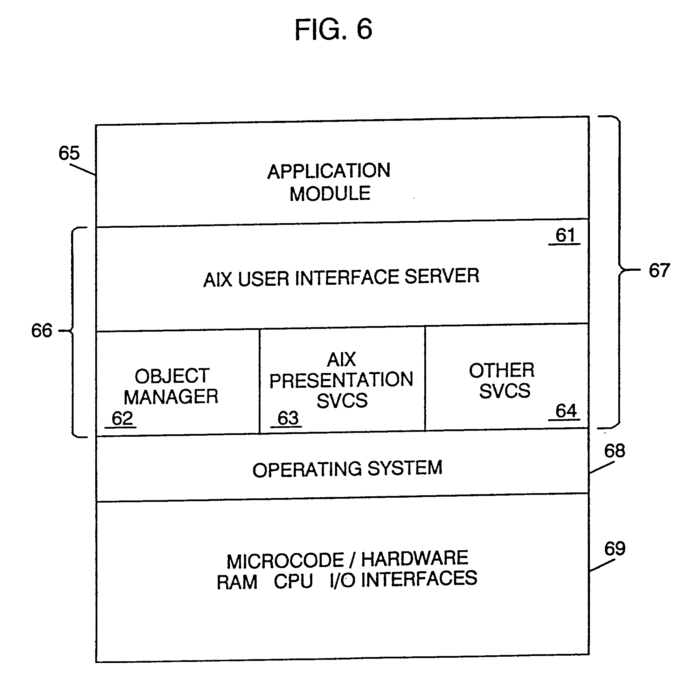

As depicted in Fig. 5, object oriented programming application 57 includes an application module 55 as well as object oriented computing environment module 56 comprising a user interface server 51, object manager 52, presentation services 53, as well as other services 54. In this example, the operating system 58 is IBM TSO. User interface server 51 provides the capability for an end user to interact with application module 51 on a panel or display screen. User interface server 51 is specifically dedicated to the TSO operating system, and it would not operate on any other operating system. Consequently, if another operating system were desired to be used, such as an AIX operating system shown in Fig. 6, then a unique user interface server 61 would have to be provided. In comparing Figs. 5 and 6, application modules 55 and 65 would be common to both systems, with the remaining elements 51-54 and 61-64 unique to each operating environment. Figs. 5 and 6 illustrate typical present day object oriented programming systems that require significant amounts of code to be written specifically for a unique operating system. There is little if any code which is platform independent and thereby portable from one operating environment to another.

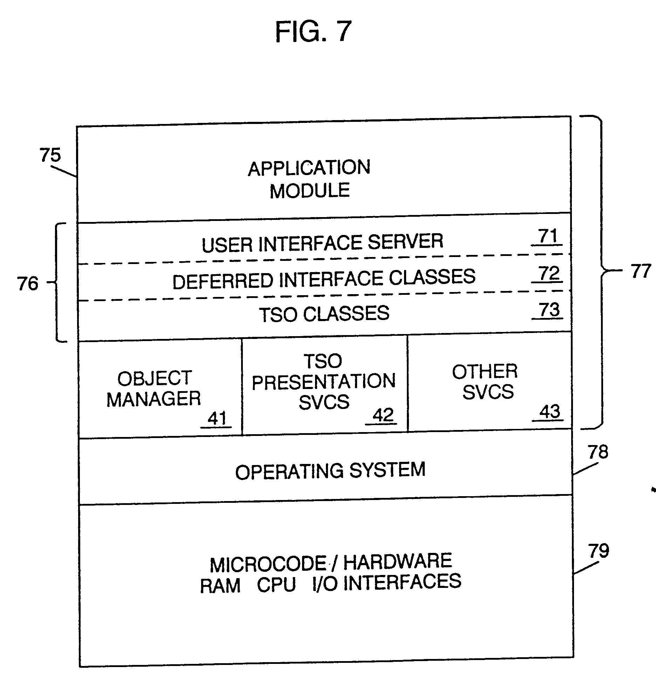

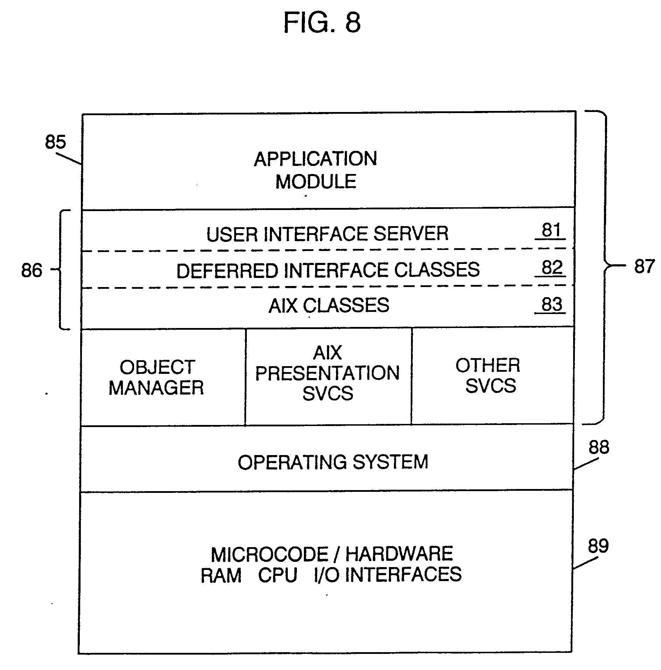

Figs. 7 and 8 illustrate an object oriented programming system according to the present invention. Fig. 7 illustrates the operation for a TSO operating system while Fig. 8 illustrates the operation for an AIX operating system. Application 77 includes an application module 75, a presentation layer 76, further including user interface server 71, deferred interface classes 72, and TSO classes 73. The classes of objects in user interface server 71 are a platform independent set of classes which define the application programming interface for application 77. The classes of objects in application module 75 inherit from the set of platform independent classes found in user interface server 71. The TSO classes 73 are a set of platform dependent set of classes for the TSO operating system. These classes of objects are unique to the TSO operating environment and would be distinctly different from the AIX classes of objects 83 found in an AIX operating environment. The classes of objects in TSO classes 73 inherit from the deferred interface classes of objects 72.

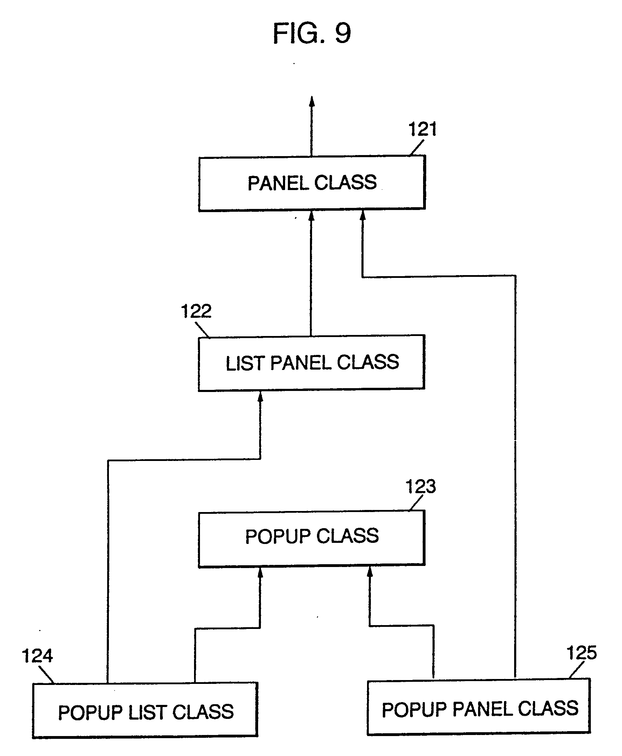

According to the present invention, there are four common types of panels used by application module 75 in order to enable an end user to interact with the application 77. These classes of panels which are contained within platform independent classes 71 of presentation layer 76, are modeless panels, modal panels, modeless list panels, and modal list panels. The modal panels are pop-ups that prevent end users from interacting with other panels as long as they are displayed. Modeless panels allow an end user to switch from one screen or panel to another. These panels are used to solicit end user response that is essential to continue a specific task that the end user is performing. The architecture of the present invention encapsulates the behavior of all four types of panels in an object oriented hierarchy of panel classes as depicted in Fig. 9.

Modeless panel class 121 encapsulates the knowledge to create, format, display, cancel and save a panel. Modeless panel class 121 also processes fields such as data entry, selection, and display field, processes action bar and function key choices, and also processes error messages.

Pop-up panel class 125, which is modal, encapsulates the behavior that provides modal panels the ability to enforce and manage modality. Additionally, modal pop-up panel class 125 inherits the features and behaviors of panel class 121.

List panel class 122 inherits the behavior of panel class 121 and encapsulates the knowledge required to process dynamic lists. Processing of lists includes maintenance of lists, i.e., adding, changing or deleting a list item, editing a list, searching a list for a specified item, and sorting a list into a specified order. The editing of a list can include the functions of cut, copy or paste.

Pop-up list class 124 inherits the behavior of pop-up class 123 and encapsulates the list processing behavior of list panel class 122.

Additionally, the panel architecture supports subclassing of all panel classes by application 77. This subclassing makes it possible for application 77 to modify and/or add any application specific behavior to the panels.

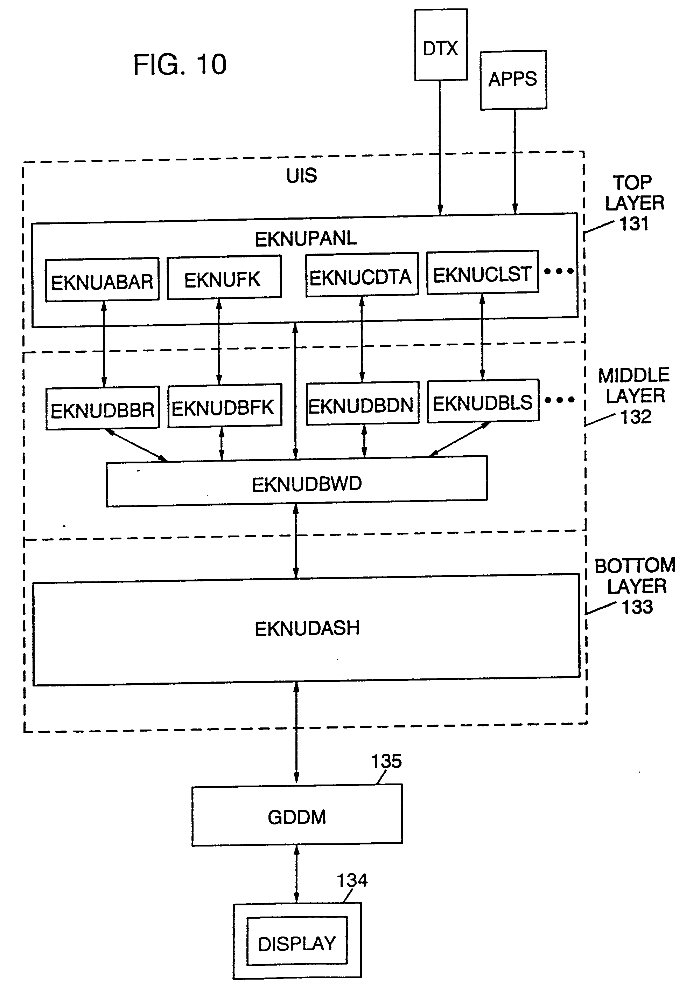

The object oriented architecture of presentation layer 76 can be decomposed into the three layers as shown in Fig. 10. The top layer 131 includes objects that are internal representations of visual entities that get displayed on an end user interface. The middle layer 132 includes objects that transform the internal representation of a visual entity into display primitives. The bottom layer 133 includes objects that are made up of display primitives providing the actual viewable interface as it appears to an end user. Consequently, objects in top layer 131 encapsulate knowledge about the properties and behaviors of panels, pop-ups, action bars, data entry fields, and static and dynamic selection lists. In addition, objects in top layer 131 store information for validating data in entry fields and store responses to end user errors and help requests. Objects in middle layer 132 and bottom layer 133 contain knowledge required to transform the internal representation of visual entities into primitives that can be displayed on a user interface. The objects in top layer 131 are platform independent while the objects in bottom layer 133 are platform dependent. The main purpose of middle layer 132 is to manage communication between the internal representation of displayable objects in top layer 131 and presentation services of objects in bottom layer 133. The three layered architecture as depicted in Fig. 10 provides means for cleanly separating the platform dependent objects in bottom layer 133 from the platform independent objects in top layer 131. According to the present invention, the classes of objects found in middle layer 132 are known as deferred interfacing classes.

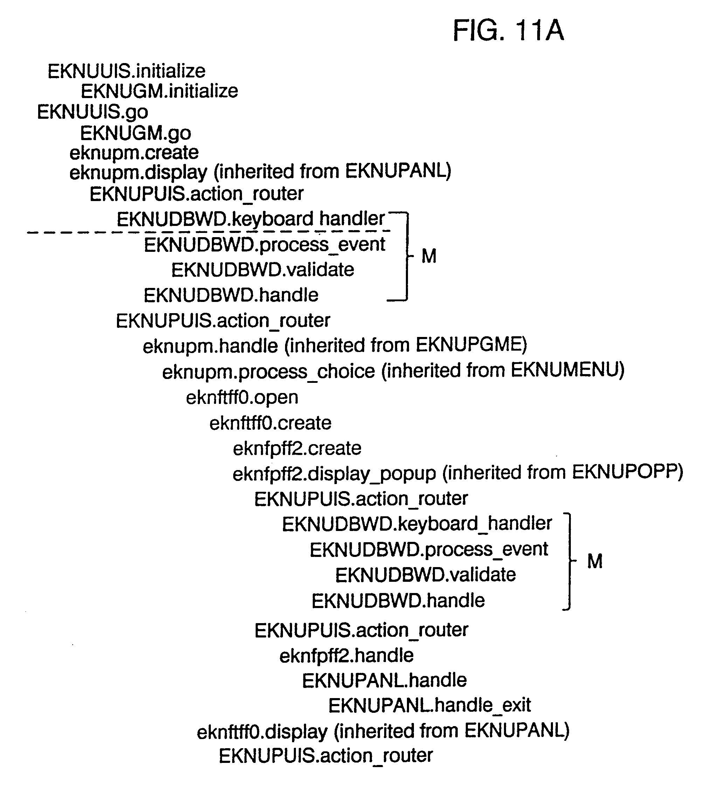

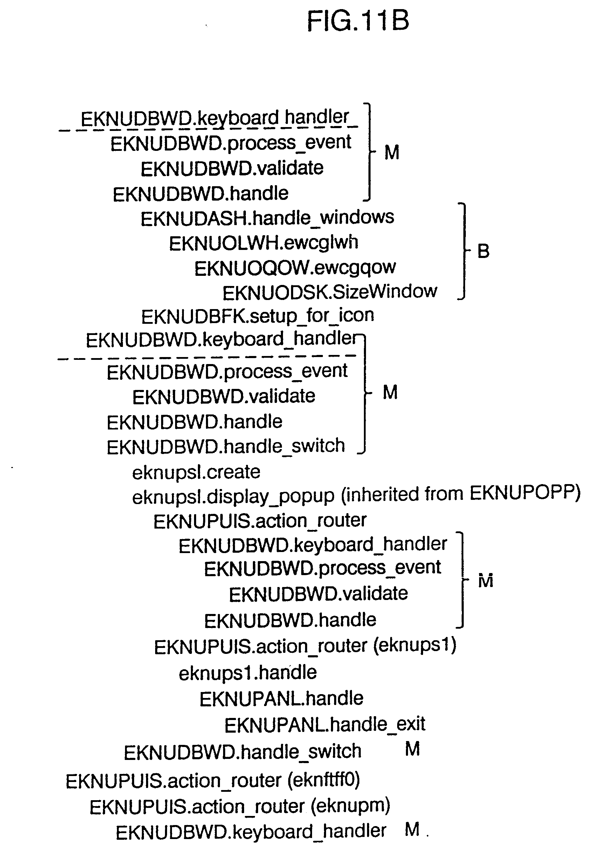

The flow of control of the objects in layers 131, 132 and 133 is depicted through the stack of calls shown in Fig. 11. The stack uses an object.method notation to describe the flow of control from one object to another. As an example, the first object and method pair at the top of the stack is "EKNUUIS.initialize" with EKNUUIS being the object and initialize being its associated method. The method is the name of the routine that is invoked by its object pair. The deferred interface classes contained in middle layer 132 have objects which are capitalized in Fig. 11.

The initialization of application module 75 begins with object manager 41 calling the initialize method of the deferred interface class EKNUUIS to start user interface server 71 initialization process. EKNUUIS.initialize then invokes the initialized routine of deferred interface class EKNUGM. EKNUGM.initialize is responsible for the startup process that involved loading information such as system messages of user interface server 71, utility characters, function key sets and color array. It also sets the session code page based on a terminal code page or the code page specified by the end user. Upon completion of this initialization process, control is returned to object manager 41.

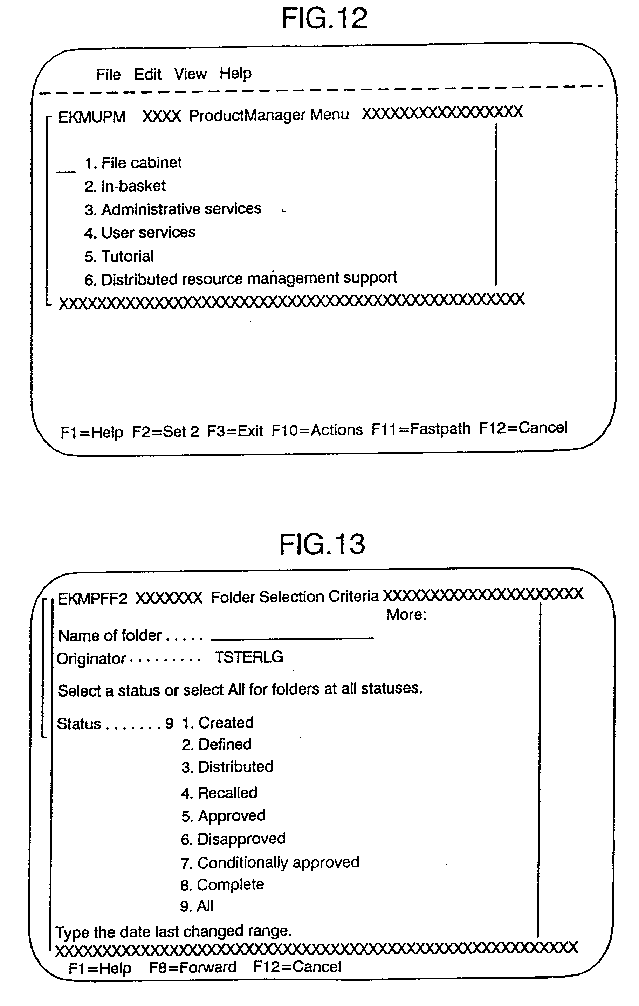

At this point, object manager 41 invokes the go routine of EKNUUIS, which then calls the go routine of deferred interface class EKNUGM. EKNUGM.go creates and displays a pop-up which enables a user to display the menu in Fig. 12 by pressing the enter key of the keyboard. The main menu shown in Fig. 12 is an instance of EKNUPM.

The creation and display of any panel in application module 75 involves calls to both "create" and "display" methods. While the "create" method often has to be redefined or renamed separately for each panel subclass, the display method is usually inherited directly from generic panel class EKNUPANL. The "create" method creates the panel object and its subobjects while the "display" method prepares the panel for viewing by an end user by first defining the appropriate function key set to the panel object based on the panel type. The "display" method then establishes the parental relationship between the panel object being created and the one creating it and then invokes the "action router" routine of the panel.

"Action router" is the panel control routine which all panels inherit from EKNUPUIS. "Action router" is the platform independent event loop. The "action router" calls the "keyboard handler" routine of deferred interface class EKNUDBWD to show the panel on the display screen. "Keyboard handler" is the platform dependent event loop. The "keyboard handler" method is also responsible for refreshing panels whenever required due to changes requested by application module 75. After displaying the panel, the "keyboard handler" routine waits for end user input.

In the next step of the process, the end user opens a file cabinet by selecting the file cabinet option on the menu shown in Fig. 12. At this point in time, "keyboard handler" calls "process event" to interpret the end user's request. The "process event" method determines the cursor position on the display screen and the action that was requested by the end user. At this point, the EKNUDBWD class conducts a validity check by first updating all panel subobjects to reflect all changes made by the end user. If no errors are found, then deferred interface class EKNUDBWD handles the end user's request. The "handle" method of EKNUDBWD is first used to determine if the end user's request can be handled within deferred interface classes EKNUDBWD and also EKNUDASH. If a message cannot be handled within these two deferred interface classes, control is returned to the "action router" routine of the panel for further processing. In the scenario shown in Fig. 11, the end user's request cannot be processed by these two deferred interface classes, and therefore control is returned to the "action router" routine of eknupm.

After the "action router" routine gets control back, it first determines if its panel is the owner of the next message. As shown in Fig. 11, FLOPEN is the next message and the main menu is the owner of the next message. Consequently, the "action router" routine invokes the main menu's "handle" method, which is inherited by eknupm from the generic menu panel class EKNUPGME. The "handle" method next invokes the "process choice" routine for the selected message. The "process choice" routine is inherited from EKNUMENU and for the FLOPEN message it determines the next panel to display.

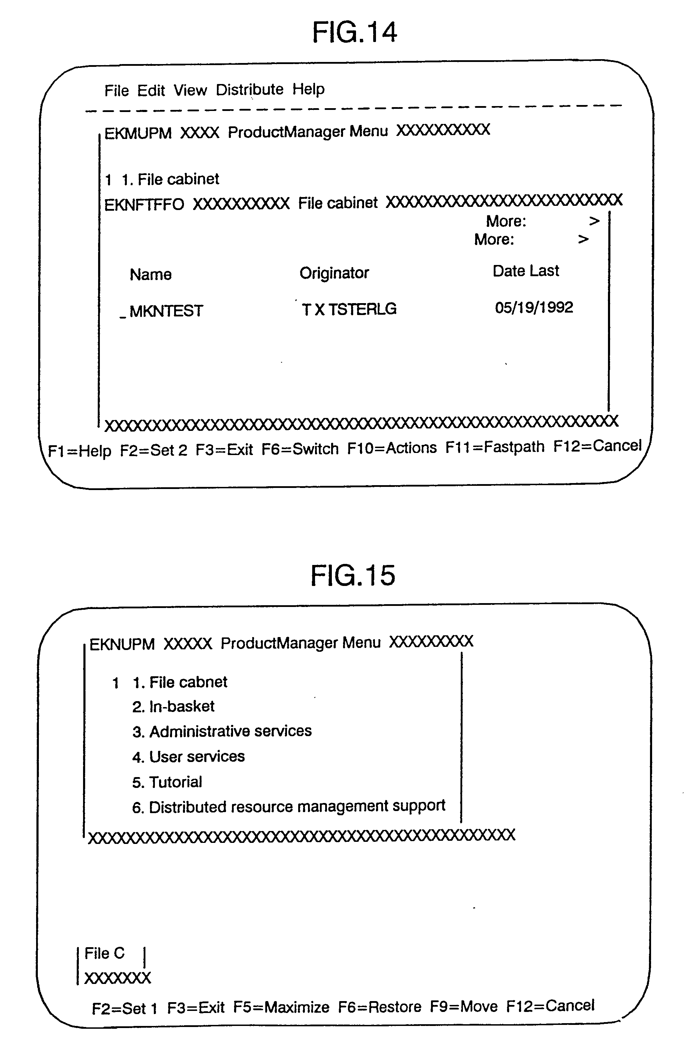

The panel displayed in Fig. 13 is an instance of the folder selection criteria pop-up EKNFPFF2. This pop-up is displayed in the same manner as all other panels using the "create" and "display" methods. When EKNFPFF2 is displayed, the "keyboard handler" routine of EKNFPFF2 is in control waiting for user input and after the end user specifies the criteria and presses "enter", EKNFPFF2 processes user input in the manner described for the main menu using "process event," "validate" and "handle" method. Since the pop-up is a file cabinet initiated dialog that must close after the user input has been validated, the "process event" method determines that FEXIT is the next message. This message cannot be handled within deferred interface class EKNUDBWD and EKNUDASH, therefore the "keyboard handler" returns control to the panel's "action router" method. The action router then invokes the panel's "handle" method which then calls the "handle exit" method which it inherits from EKNUPANL to close the selection criteria pop-up. Control finally returns to the "create" method of EKNFTFF0, which then proceeds with the creation and display of the file cabinet lift handle as shown in Fig. 14.

The next step in the process involves minimizing the file cabinet list panel by using the minimize function key. When an end user presses the minimize function key, the end user request is processed by the "keyboard handler" method in the same manner as described earlier for both the main menu and the file folder selection criteria pop-up. At this time, however, the "validate" method is not called because no validation is associated with function key requests. Additionally, since the request to minimize the file cabinet list panel can be handled by deferred interface class EKNUDBWD, the "handle" method of EKNUDBWD processes the request. The processing of an end user request to minimize the file cabinet list panel begins with EKNUDBWD.handle calling the "handle windows" method of EKNUDASH. This routine interfaces with several C modules where calls are made to make icons of the file cabinet list handle. After such icons have been made, the "handle" method of EKNUDBWD calls the "set up for icon" method of EKNUDBFK. This method resets the active function key set for panels that have had icons created for them. Fig. 15 illustrates the view of the screen with the file cabinet list panel made into an icon in the bottom left hand corner of the screen.

The last step in the process shown in Fig. 11 involves switching back to the main menu from the iconified file cabinet list panel shown in Fig. 15. To do so, an end user first restores the file cabinet list panel to its original size using the restore function key, and then presses the "switch" function key. The processing of the switch message is similar to the processing of the minimize function with the exception that the "handle switch" routine is invoked instead of the "handle window" routine.

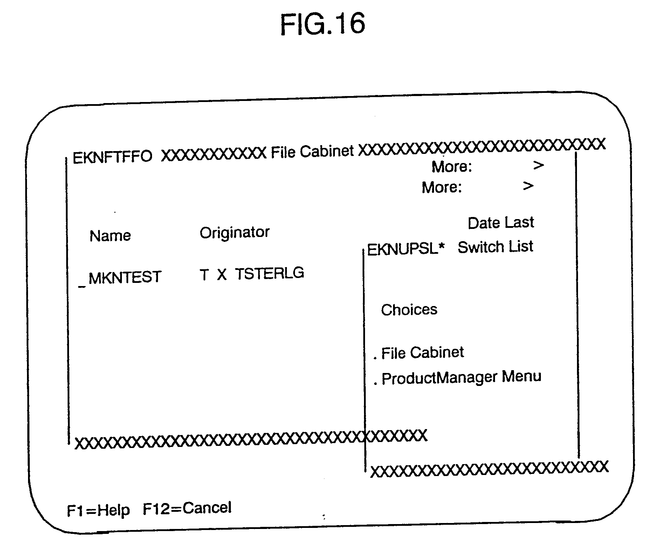

The "handle switch" routine first builds the list of panel titles to display on the switch pop-up. This list is then passed to the "create" routine of the switch pop-up that gets displayed next as seen in Fig. 16. After the switch pop-up is displayed, an end user selects the main menu and presses "enter", thereby completing the end user's request to switch to the main menu. In processing this request, the "handle" method of switch pop-up EKNUPSL calls its "handle exit" method to close the pop-up and then return the control to the "handle switch" routine. EKNUDBWD.handle switch then takes the selection made by the end user on the switch pop-up and assigns the main menu to be the current panel.

When the control returns to the "action router" of the file cabinet panel from where the switch message was initiated, the file cabinet is no longer the current window and the control exits out of the "action router" routine. When the "action router" routine of eknftff0 is unable to handle a message because it is no longer a current window, the responsibility of handling the message falls upon eknupm, which is the immediate parent of eknftff0. Since the main menu is the current window, its "action router" routine calls EKNUDBWD.keyboard handler to highlight the window border. This then completes the handling of the switch message.

## Claims

1. In an object oriented programming system, a display apparatus, comprising:
at least one application program having a user interface, said user interface including objects which are representations of visual entities;
means for displaying objects which are display primitives on a display device; and
means for transforming said objects which are representations of visual entities into said objects which are display primitives.

2. The display apparatus according to claim 1 wherein said objects which are representations of visual entities, comprise a set of platform independent classes of objects, and wherein said objects which are display primitives, comprise a set of platform dependent classes of objects.

3. The display apparatus according to claim 2 wherein said transforming means comprises a set of deferred interfacing classes of objects.

4. The display apparatus according to claim 1 wherein said objects which are representation of visual entities further comprises panels, pop-ups and action bars.

5. The display apparatus according to claim 1 wherein said user interface further comprises a set of application program classes of objects and a set of platform independent classes of objects.

6. The display apparatus according to claim 5 wherein said application program classes of objects inherits from said set of platform independent classes of objects.

7. The display apparatus according to claim 3 wherein said set of platform dependent classes of objects inherits from said set of deferred interfacing classes of objects.

8. A method for displaying objects in an object oriented programming system having an application program comprising a user interface including objects which are representations of visual entities, the method comprising:
displaying objects which are display primitives on a display device; and
transforming objects which are representatives of visual entities into objects which are display primitives.
